# EUROPEAN PATENT SPECIFICATION

(11) **EP 2 684 385 B1**
(45) Date of publication and mention of the grant of the patent: **11.02.2015**
(21) Application number: 11717784.0
(22) Date of filing: 09.03.2011
(51) Int. Cl.: H04W 12/12, H04K 3/00

(54) **TRANSMISSION OF AN ALARM SIGNAL IN A WIRELESS COMMUNICATION SYSTEM**
ÜBERTRAGUNG EINES ALARMSIGNALS IN EINEM DRAHTLOSEN KOMMUNIKATIONSSYSTEM
TRANSMISSION D'UN SIGNAL D'ALARME DANS UN SYSTÈME DE COMMUNICATION SANS FIL

(43) Date of publication of application: 15.01.2014
(73) Proprietor: Telefonaktiebolaget L M Ericsson (PUBL), 164 83 Stockholm (SE)
(72) Inventor: SELANDER, Göran, SE-168 34 Bromma (SE); NÄSLUND, Mats, SE-168 36 Bromma (SE); SKILLERMARK, Per, SE-120 54 Årsta (SE); ALMGREN, Ritta, 191 43 Sollentuna (SE)
(74) Representative: Kühn, Friedrich Heinrich
(86) International application number: PCT/SE2011/050260
(87) International publication number: WO 2012/121634

(56) References cited:
- WO-A1-2005/112321
- US-A1- 2010 296 387
- US-B1- 6 735 630

## Description

### TECHNICAL FIELD

The present invention relates generally to a method and an arrangement in a wireless communication device. In particular, it relates to transmission of an alarm signal.

### BACKGROUND

Theft of personal items such as vehicles, e.g. cars, is unfortunately commonplace. Locks provide some protection but can often be circumvented. Alarms give more protection but do not always work either. In particular, these anti-theft measures are deterring, protective and/or detective but provide no means to recover the stolen item. There is thus a need to also trace a stolen item such as a car, a personal computer or in general any kind of item, person, or animal. Indeed, even stationary items may need to be protected, a typical example being a burglar alarm on a house.

A common way to provide tracking is to equip the item in question with a Global Positioning Service (GPS) receiver, and some means for wireless communication, e.g. a Global System for Mobile communications (GSM), Universal Mobile Telecommunications System (UMTS) or Long Term Evolution (LTE) wireless modem/module. The GPS receiver constantly monitors the position of the item and transmits it to a "tracking center", or alternatively to the item's owner, via the GSM, UMTS or LTE network.

There also exists systems using electronic shackles, which are used to detect e.g. if a criminal leaves his house. Such systems commonly utilize a short range radio transmitting presence information to a local receiver, typically connected to fixed telephone line in the home. However, proposals also exist to use a wireless network, such as GSM, UMTS or LTE, for transmitting the information.

Residential homes are often provided with intrusion alarms, which may be connected to a fixed telephone line, or to a wireless network such as GSM, UMTS or LTE.

It has recently become known that a GPS-based tracking solution is very easy to disable. A low power local radio transmitter may be used to jam the GPS receiver, making it impossible for it to receive signals from the GPS satellites. Thus, positioning becomes disabled.

Since intrusion alarms in residential homes are normally passive, i.e. no signal is transmitted unless the alarm is triggered, a residential alarm using a wireless network such as GSM would become very ineffective if the intruder locally jams the radio signal. Since the alarm is normally passive, the absence of an alarm signal cannot be used as an indication for an alarm trigger either.

Similarly, an electronic shackle using GSM, or any other wireless network, could be jammed. The seriousness of the problem here would depend on whether the shackle is normally passive or normally active: If the shackle is expected to intermittently send a "heart beat" to the network, e.g. once per minute, then the absence of such signal could trigger an alarm. Nevertheless, if the GSM signal is constantly jammed, it would become difficult to actually locate the escaped person wearing the shackle.

WO2005/112321 discloses a method for jamming detection and signalling in a mobile wireless telecommunications network. According to this method, a user equipment (UE) registered with the network detects ongoing jamming by checking whether the received signal power in at least one communication channel is greater than a threshold, and if so, the UE attempts to decode a Base Station Identity Code (BSIC) broadcast by the base station on that channel. If the BSIC cannot be decoded, the UE concludes that it is being jammed, and transmits a jammed condition report (JDR) message to the base station over the Random Access Channel (RACH).

However, this method requires that the UE has registered with the network, or at least received/decoded some information from the network before jamming begins. This is because in order to transmit information on the RACH channel, the UE first needs to obtain certain synchronization and configuration information which is broadcast by the base station. Therefore, the method will not work if the downlink signal is already being jammed when the UE first tries to access the network. Furthermore, the prior art method does not achieve reliable transmission of an alarm signal in the event that all downlink channels are being jammed. This is because even if the UE has established a network connection before jamming begins, the synchronization information which is necessary for transmitting on the RACH becomes invalid as the UE moves away from the location where the connection was established. In particular, if the UE crosses a cell border or moves out of coverage of the current radio access technology (RAT) while jamming is ongoing, transmission of the alarm signal will cease completely, since the UE cannot receive any synchronization and configuration information from the new base station. Neither can the UE obtain the necessary measurements or information for roaming into another RAT. Thus, even if the UE may in some cases be able to transmit an initial alarm signal to indicate that it is being jammed, subsequent tracking of the location of the UE is effectively prevented. Note that in a sense, it is likely to be easier for an entity trying to prevent tracking to emit a wideband noise signal than to do direct jamming toward a particular narrow channel. Hence, this poses a serious threat to the reliability.

Moreover, an intruder may circumvent the prior art solution by transmitting a fake BSIC which the UE is able to decode. This is because the broadcasted BSIC cannot be authenticated. This would prevent the jamming condition report from being transmitted.

A further drawback of the method disclosed in WO2005/112321 is that the jamming report message is transmitted if, and only if, jamming is detected. However, in certain scenarios this is not necessary, whereas in other cases it is not sufficient. Using the example of a car, jamming of the radio interface is not in itself evidence that the car is being stolen. For example, the downlink signal could accidentally be interfered by another nearby wireless device, such as a mobile phone in use inside the car. In such a case, transmitting a jamming report would trigger a false alarm. Conversely, the car may have been stolen even though the radio interface is not being jammed.

Furthermore, a resourceful intruder could mislead the system by transmitting several jamming condition reports with the same identity from different locations, such that the system cannot detect which is the authentic alarm signal, and which signals are fake. This may obstruct, or completely prevent, tracking of the device.

There is thus a need in the art for a more reliable mechanism for jamming mitigation.

### SUMMARY

An object of the present invention is to provide an improved mechanism for jamming mitigation in a wireless communications system.

In various embodiments, a method is provided in a wireless communication device for transmitting an alarm signal to a radio access node. According to this method, the wireless communication device detects jamming of a downlink signal which is transmitted from the radio access node. The wireless communication device then transmits an alarm message, or alarm signal, over a non cell-specific contention-based uplink radio channel. The alarm message comprises information relating to an identity associated with the wireless communication device. The parameters required for transmitting on the non cell-specific contention-based uplink radio channel are preconfigured in the wireless communication device.

In particular embodiments, the preconfigured parameters may be the carrier frequency and/or uplink frequency resources for transmitting the alarm message. The preconfigured parameters can also include the size of the alarm message.

In other particular embodiments, the preconfigured parameters are preconfigured on a subscriber identity module comprised in the device, or hardcoded in the device. The parameters may be preconfigured at time of manufacture. Furthermore, in some embodiments preconfiguring may be done by remove provisioning

In various other embodiments, a wireless communication device is provided, which is configured for transmitting an alarm signal to a radio access node. The wireless communication device comprises a transmitter, a receiver, a memory and a processing circuit. The receiver is configured to detect jamming of a downlink signal transmitted from the radio access node. The transmitter is configured to transmit an alarm message over a non cell-specific contention-based uplink radio channel. The alarm message comprises information relating to an identity associated with the wireless communication device. Furthermore, the memory is preconfigured with the parameters required for transmitting on the non cell-specific contention-based uplink radio channel.

Since the uplink channel is contention-based and the parameters required to transmit on the channel, such as carrier frequency or uplink frequency resources, are preconfigured in the wireless communication device, it is not necessary for the device to establish any network connection before the alarm signal can be transmitted, e.g. to obtain synchronization or timing information. Thus, the present invention makes it possible to transmit an alarm signal even if the jamming signal is already present before the wireless device has been able to successfully access the network, e.g. before the device is powered on. Furthermore, the use of a non cell-specific channel enables the alarm signal to continue to be transmitted if the wireless device moves between the coverage areas of different cells in the network, or even between networks, while being jammed.

At least some embodiments of the invention hence contribute to mitigating jamming of the cellular alarm and tracking systems, which enhances the probability that an alarm is triggered when a device is stolen and also that the stolen device can be tracked and finally recovered. By surveilling the alarm channel by the mobile network or some entity connected thereto, the jamming party may be tracked according to some embodiments.

### BRIEF DESCRIPTION OF THE DRAWINGS

- Figure 1: is a schematic diagram illustrating a scenario in a radio access network.
- Figure 2: is a flow chart illustrating a method in a wireless communication device according to some embodiments.
- Figure 3: is a flow chart illustrating a method in a wireless communication device according to some embodiments.
- Figure 4: is a flow chart illustrating a method in a wireless communication device according to some embodiments.
- Figure 5: is a schematic block diagram illustrating an arrangement in a wireless communication device according to some embodiments.

### DETAILED DESCRIPTION

Some embodiments of the invention make use of a wireless device, also referred to as a terminal, which is comprised in a radio network such as GSM, UMTS, or LTE. The device may be incorporated e.g. in a car or a home. In the following examples we assume that the wireless device is comprised in a vehicle or other item capable of movement, but the concepts presented here are equally applicable to stationary items, such as buildings etc. The wireless device communicates with the radio network, and transmits some information which can identify the item, e.g. the International Mobile Subscriber Identity (IMSI) or other identifier of the wireless device, a user identifier associated with the owner of the item, or some identifier specific to the item, e.g. car chassis or registration number, or suitable combinations of such identities. The identification information will be transmitted via one or more radio base stations comprised in the network. Using known positioning methods, such as triangulation, the radio network is able to deduce the location of the item with reasonably good accuracy, and report it into a tracking center and/or the item's owner. Since the positioning is network based rather than terminal based, it becomes very difficult to interfere with.

However, in order for a wireless device to transmit data, the device needs to establish a connection with the network for control signalling and data plane transmission. The control plane is used e.g. to control transmit power, allocate radio resources, acknowledge data transfer etc. Hence, it is clear that a resourceful attacker could also jam these channels. In particular, interfering with the control channel may make it impossible for the terminal to establish a connection for data transfer. In fact, it may be sufficient to jam the downlink, since this would prevent the wireless device from finding necessary SYNCH information. Moreover, with the jamming radio source being in close proximity to the item it could, by transmitting at low power, effectively jam the terminal but still not be remotely detectable as an intruder in the licensed spectrum. As mentioned above, if the jamming begins before the wireless device is able to successfully access the network and obtain at least synchronization and timing information, the wireless device may be effectively prevented from sending an alarm signal. Furthermore, even if the device were able to establish an initial connection to the network, and acquire the necessary parameters for transmission on e.g. the RACH channel, those parameters would still only apply to the base station which is serving the wireless device at that moment. Once the device moves out of the coverage area of the serving base station, it is unlikely that the same parameters, e.g. carrier frequency or uplink resources, can also be used to transmit an alarm signal in the new cell. Thus, if the downlink channels are still being jammed at that point, alarm transmission will still fail.

In various embodiments of the invention, this and other problems are addressed by transmitting the alarm signal on a special contention-based uplink radio channel, e.g. a random access channel, which is well known to the terminal and to the network beforehand. In particular, all parameters that are required for accessing the channel are preconfigured in the wireless device. Thus, the terminal is not dependent on receiving information on any downlink channel in order to transmit the alarm signal.

Furthermore, the channel is non cell-specific, i.e. the parameters for transmitting on the channel are valid across multiple cells in the network. Preferably, a global alarm channel is established; however a national-wide or region-wide, e.g. European-wide, channel is also possible. It is also conceivable that the channel is operator-specific, i.e. the parameters for transmitting on the channel are valid in all cells that provide coverage for a certain operator. Although the device could, in this case, not be tracked if moved out of operator coverage, the likelihood of being able to transmit an alarm signal would still be significantly improved.

The alarm signal comprises at least information relating to an identifier for the item and/or the wireless device. In some embodiments, the wireless device transmits on the special radio channel even if it does not detect any acknowledgement from the radio network.

The uplink channel is a contention-based channel over which packet transmission takes place without prior coordination; hence, collisions and packet errors may occur over such channel. For example, the transmission may be based on the ALOHA protocol, which is one of the most simple, yet elegant, random access protocols. The ALOHA protocol states that as soon as a packet is generated it is transmitted over the shared channel. If the packet can be successfully decoded, i.e. received, at the receiver, an acknowledgement is transmitted back to the transmitter over a feedback channel. If the acknowledgement message is not received, the transmitter may assume that a packet error occurred and that the packet must be retransmitted. To avoid that the same set of packets continue to collide indefinitely, the packet retransmission may be scheduled at a random, future time.

A variant of the ALOHA protocol is slotted ALOHA, in which all transmitters are time synchronized and packet transmission can only start at the beginning of a time slot. Compared to pure ALOHA, slotted ALOHA increases the throughput of the system.

In the particular case considered here, no feedback channel from the network to the terminal may be available due to jamming. Hence, the data transfer must take place without the support of a feedback channel. On the other hand, here the message content does not typically change over time; the message content may be the identity of the device or similar, and the estimated position of device may be derived by the network and added to the message after the reception at the base station, or added at some other point of the network, aggregating information from multiple base stations.

Of course, an attacker could jam also the uplink channel, e.g. the ALOHA channel, itself. For this to be effective, however, the attacker needs to transmit with a jamming signal power that blocks the UL channel at the base station. This means that the base station, and the network, can detect the presence of this jamming and raise an alarm. This could trigger special monitoring of the uplink channel in neighbouring cells, or, in general, across the whole network.

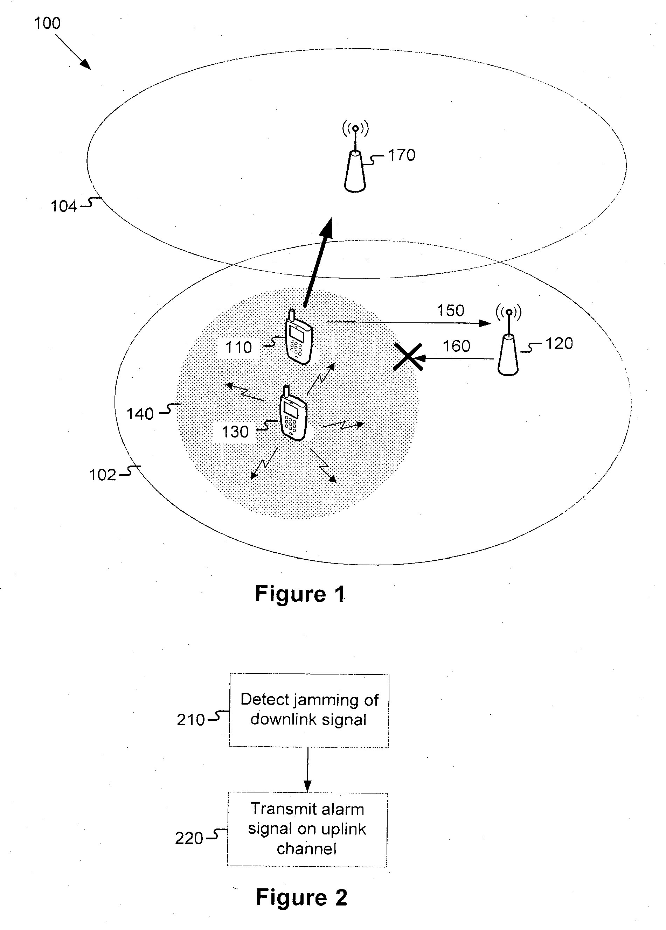

A method for transmitting an alarm signal according to some embodiments will now be described with reference to **Figure 1** and the flowchart in **Figure 2****.**

Figure 1 illustrates a scenario in which various embodiments of the invention may operate. A wireless communication device 110 is being jammed by a signal transmitted by jamming device 130. In this example, we assume that the wireless communication device 110 is comprised in a car (not shown), but it is equally possible for the device to be comprised in any other vehicle or moving item as described above. The wireless communication device 110 may also be a mobile phone, such as a LTE User Equipment (UE). A wireless communications network 100, e.g. LTE, comprises a cell 102 served by a radio access node 120, e.g. an LTE evolved NodeB (eNB). The radio access node 120 is transmitting, possibly by broadcasting, a downlink signal 160 comprising e.g. synchronization and timing information. However, the jamming signal transmitted by jamming device 130 interferes with downlink signals in an area indicated by the dotted region 140. In particular, downlink signal 160 is interfered by this jamming signal, as indicated by an X at the edge of the dotted region 140. Thus, wireless communication device 110 cannot detect - or at least not decode - the downlink signal 160. In particular, if the wireless communication device 110 moves away from the coverage area of cell 102 into cell 104, which is served by radio access node 170, the wireless communication device 110 will be unable to detect any downlink signals from radio access node 170, assuming that the jamming from device 130 continues. If radio access node 170 uses another carrier frequency, modulation scheme etc for the uplink alarm channel, it will not be possible for wireless communication device 110 to transmit an alarm message to the radio access node 170, and thus the device can no longer be tracked.

In the following disclosure, it is sometimes stated that a signal is transmitted to, or received from, a wireless communications network. It should be understood that the actual transmission or reception of the physical signal is then generally performed by an access node comprised in said network, for instance radio access node 120 in cell 102.

Referring now to Figure 2, in a step 210 of the example method, the wireless communication device 110 detects jamming of the downlink signal 160, which is being transmitted from the wireless communications network 100. This detection may be performed by various known methods, as will be further described below. For example, the wireless communication device 110 may assume that jamming is present if it fails to detect or decode a wireless communications network, even though an electromagnetic field of a certain strength is present. In some variants, the wireless communication device 110 may perform a scan at regular intervals to detect if jamming is ongoing.

If jamming is detected, i.e. if the wireless communication device 110 determines that a downlink signal is being jammed, the wireless communication device 110 transmits an alarm signal 150 over a non cell-specific contention-based uplink radio channel in step 220. Note that transmission of the alarm signal may be conditioned on an external alarm event, e.g. the car to which the wireless communication device 110 is attached having triggered such an alarm event, this will be discussed further below. The alarm signal 150 comprises information relating to an identity associated with the wireless communication device 110, e.g. the IMSI or car registration number. The information may comprise the full identity, or alternatively only a part of the identity. In the latter case, several consecutive messages may be transmitted comprising different parts of the identity, allowing the radio access node 120 to reconstruct the complete identity by concatenating or otherwise aggregating the parts.

As mentioned above, the channel is non cell-specific, and may for instance be global, region-wide, nation-wide or operator-wide. In other words, the parameters required to transmit on the channel are valid across several cells in the network, or even in multiple networks.

The parameters required for transmitting on the uplink radio channel are preconfigured in the wireless communication device 110. Thus, the wireless communication device 110 does not need to register with the wireless communications network 100 before transmitting the alarm signal 150, or obtain any synchronization or timing information from radio access node 120. Instead, wireless communication device 110 uses the preconfigured parameters for transmission over the uplink channel.

From a radio point of view, a few basic parameters should be preconfigured to be able to transmit on the uplink channel. First, the carrier frequency and the bandwidth of the transmission should be preconfigured, for the receiver to listen in the correct spectrum. Also, the physical layer transmission scheme should be settled, e.g., whether it is OFDM, single-carrier and with what parameters.

The preconfigured parameters may further comprise a defined transmission pattern for the message, which may start with a header that contains one or more pilot symbols or reference symbols, transmitted with given modulation scheme that the receiver can search for to detect that there is a packet coming in and that can be used for channel estimation.

The parameter may further comprise a given number of symbols/bits to be used for transmitting the message, and a predefined modulation and coding scheme.

In some variants, the modulation and coding scheme are predefined to QPSK and 1/3 rate coding.

The alarm message may further comprise a field for signaling the packet size, or message size. In some variants, a few different sizes are preconfigured, e.g. small, medium, and large packets may be predefined. The wireless device would then include information about the selected size in the message header.

In some variants, the preconfigured parameters comprise more than one configuration, e.g. more than one carrier frequency. For instance, several configurations could be defined for different radio access technologies that are supported by the wireless communications device. In these variants, the wireless communication device may transmit several alarm signals, using a different configuration for each transmission. This may improve the chances that at least one message is received, in case the wireless communication device moves between areas covered by different radio access technologies, and thus requiring different parameters to access the uplink alarm channels.

If more flexibility is desired, the transmitter, i.e. the wireless communication device, may also select how many bits are included in the packet. In this case this information must be included in the message, e.g. the packet header, such that the receiver can get this information and decode the message contents.

Other examples of preconfigured parameters are: which uplink frequency resources to transmit on, transmission scheme (e.g. OFDM), and parameters of the transmission scheme used. In the case of OFDM, the parameters of the transmission scheme may include sub-carrier spacing, number of sub-carriers, and length of the cyclic prefix.

There are several possible ways to preconfigure the parameters for transmitting on the uplink channel. In some variants, the parameters are preconfigured on a subscriber identity module, SIM, comprised in the wireless communication device 110. The SIM may be an embedded SIM which is integrated into the circuitry of the device.

In other variants, the parameters are hardcoded in the wireless communication device 110 e.g. by the device manufacturer or distributor, such as a security firm or car seller.

In yet further variants, the parameters are received from a radio access node. The second radio access node may be a second radio access node, different from the radio access node 120. That is to say, step 210 may be preceded by another step, performed before jamming has started, wherein the wireless communication device acquires the parameters from a radio access node.

Some, or even all, of the parameters may also be configured when the item to which the wireless communication device is attached is being deployed, e.g. when a car is being sold. For example, the user identity (e.g. driver's license identity) of the car's owner may be then be added/included as part of the device identity. Likewise, the owner may insert a previously acquired SIM card in which case some parameters (e.g. IMSI) may be operator specific and configured in this way. Yet another option is that the car dealer or local, e.g. national, car manufacturer representative provisions at least some of the parameters as the car is customized for the local market and/or owner.

As means for provisioning of parameters a configuration device, e.g. a personal computer, attached via cable, infrared, short-range radio or other suitable connection could be used. USB sticks, SD cards, etc, may also be used.

During transmission over the preconfigured uplink channel, the wireless communication device 110 may not have sufficient information about the path loss to or the interference at the receiver, i.e. radio access node 120. To minimize the risk of packet error, the alarm signal 150 is, in some variants of this embodiment, transmitted with a high power and a robust modulation and coding scheme. One possible selection is 1/3 rate coding and QPSK modulation, in combination with high, e.g. maximum, transmit power.

Some variants of this embodiment use a transmission mode that allows for soft combining, by means of Chase combining or incremental redundancy, at the receiver 120. In that case, if it is not possible for the network to decode the packet based on a single transmission attempt, the signal from several transmissions can be combined to reduce the error probability. This option can be used provided that the message content does not change over time.

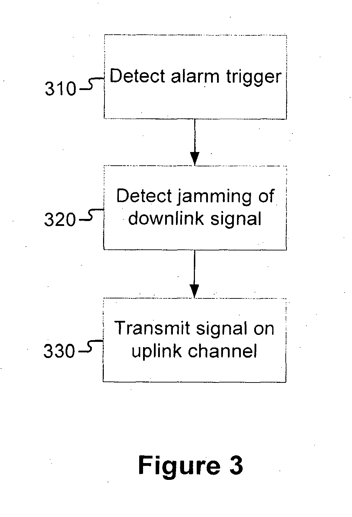

Another example method for transmitting an alarm signal will now be described, illustrated by Figure 1 and the flowchart in **Figure 3****.** This example is based on the previous embodiment. However, here the alarm signal 150 is transmitted in response to jamming detection combined with one or more other alarm triggers.

In step 310, the wireless communication device 110 detects an alarm trigger, which may be e.g. an intrusion alarm, a user-initiated alarm, or any combination of these triggers.

If an alarm trigger is detected, the wireless communication device 110 proceeds to detecting if a downlink signal is being jammed in step 310. If this is the case, the wireless communication device 110 transmits, in step 330, an alarm signal 150 on a non cell-specific contention-based uplink channel, using preconfigured parameters. Thus, steps 320 and 330 correspond to steps 210 and 220 as described above.

In case no jamming is detected in step 310, the wireless communication device 110 may instead transmit an alarm signal using normal channels, e.g. conventional LTE or GPRS data radio bearers which are set up according to pre-defined procedures.

By combining jamming detection with other alarm triggers, the risk of triggering a false alarm is reduced. For instance, in a scenario where the wireless communication device 110 is comprised in a car, and a mobile phone inside the car is interfering with the signal 160, the wireless communication device 110 may falsely conclude that jamming is present. However, in the embodiment of Figure 3, no alarm signal would be transmitted, because the car theft alarm has not gone off.

Furthermore, the energy consumption of wireless communication device 110 may be reduced in this embodiment, as the device 110 does not need to continuously or regularly scan for jamming. This may be helpful in particular for small-battery powered devices.

In another embodiment, step 310 is performed directly followed by step 330. That is to say, an alarm trigger such as an intrusion alarm is triggered, and in response to this the wireless communication device 110 transmits an alarm signal on the non cell-specific contention-based uplink channel. Thus, in this embodiment no jamming detection step takes place. Instead, the alarm signal is always transmitted on the special alarm channel, regardless of whether jamming is ongoing or not. This embodiment may be beneficial in case a thief finds a way to disable or fool the jamming detection mechanism.

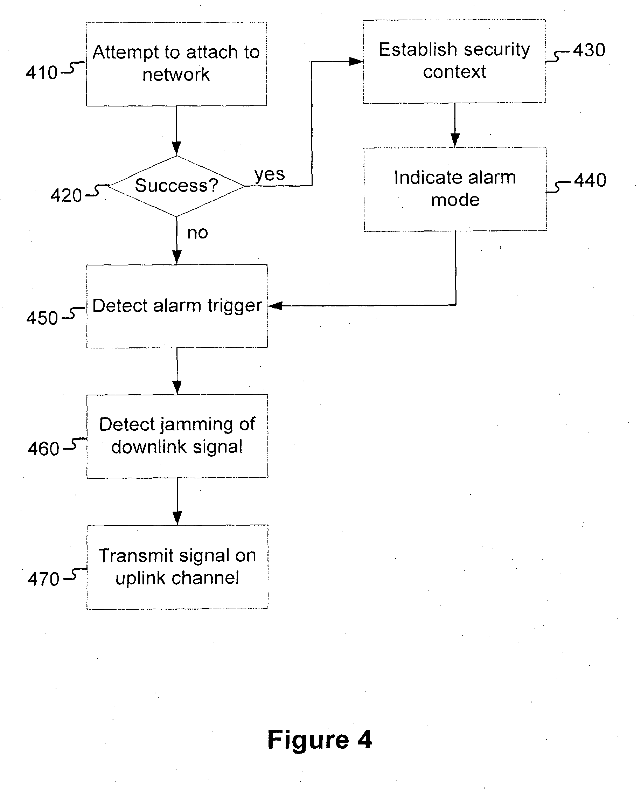

The flowchart in **Figure 4** illustrates another example method according to some embodiments. The wireless communication device 110, interchangeably referred to as "the terminal" below, performs a handshake with the network 100 at power on. The handshake process starts with a request, or attempt 410 to attach to the network 100.

If the network attach is successful, 420, the terminal establishes a security context with the network in step 430 as part of the registration. In some embodiments, the terminal may additionally register itself in a special alarm mode, 440. An alarm mode registration will be remembered by the network, e.g. by the MME/VLR/SGSN, and data transfers associated with such a terminal may be given higher priority. In general, terminals registered as being in alarm mode may receive special treatment, as described in more detail below. After the terminal has established a security context and optionally also registered in alarm mode, it regularly scans for any alarm trigger 450 in a normal fashion, e.g. for triggers from a car's intrusion detectors. Likewise, even if the terminal cannot attach to the network, i.e. the attempt to attach in step 410, 420 is not successful, the terminal will still await alarm triggers.

Once one or more alarm trigger is detected in step 450, the terminal needs to send an alarm report to the wireless network 100. In step 460, the terminal detects whether the radio is currently jammed, i.e. if there is jamming of a downlink signal. If the radio is not jammed, normal alarm procedures can be followed, using e.g. a position from GPS or the wireless network 100 and communication over normal channels in the wireless network 100. Note that in this mode, when the radio is not jammed, the communication can always be protected.

If, on the other hand, it is detected in step 460 that the radio is jammed, the alarm message 150 will be transmitted over a non cell-specific contention-based uplink channel, e.g. an ALOHA channel, which does not depend on any downlink channel. In other words, the parameters required for transmitting on the uplink channel are preconfigured in the terminal 110. If possible, the message over the ALOHA channel is protected. Whether this is possible depends on if the terminal was able to establish a security context in previous step 430. Specifically, suppose that the terminal did manage to register previously, but is now being jammed. Then the terminal could protect, i.e. authenticate, the alarm signal 150, e.g. an uplink ALOHA message, by using the keys available in the previously established security context. Now, if the terminal has been moving in idle mode, the radio network node 120, e.g. an LTE eNB, which receives the alarm signal 150, may not be able to authenticate the terminal since it does not have the necessary keys. However, in systems such as EPS/LTE, the MME will act as an anchor and will have a copy of the NAS (Non-access Stratum) keys. Hence, a radio network node 120 which receives messages on the uplink channel can forward them to the MME which can verify the authenticity on NAS level. If the verification is successful, the MME may moreover, for terminals in alarm mode, push down security keys to the radio network node 120, and possibly also to its neighbors, so that additional signaling may be verified locally.

Another possibility is to integrity protect the transmitted alarm signal 150 using a pre-configured key in the terminal, i.e. the wireless communication device 110. This key can be provisioned by any of the means previously discussed for configuration of device parameters.

Using this procedure, an alarm report 150 may be transmitted also in case the terminal or wireless communication device 110 is not registered with the network 100. Also, the message is protected whenever possible. Any alarm trigger, and not only a BSIC decoding failure, will initiate the alarm report. Given that any other alarm trigger has been registered, the alarm message 150 will be transmitted even if the BSIC can be correctly decoded. Moreover, the invention cannot be circumvented by injecting faked transmission of a seemingly valid BSIC.

It can be noticed that the alarm function can in the general case be viewed as an application using radio communication over e.g. the previously discussed ALOHA channel. Thus, a single logical alarm message may in some cases be fragmented and transmitted over a plurality of lower layer packets, e.g. ALOHA packets. In embodiments where it has been possible for the wireless communication device to attach and establish a security context, protection, e.g. integrity and/or encryption may therefore be applied per packet. For example, in LTE protection is implemented in the PDCP layer, protecting the individual PDCP packets. In other embodiments, when a pre-configured key is used, protection may as an option be applied at the "alarm application" layer, thus protecting logical alarm messages. In either case, the effect will be same from protection point of view.

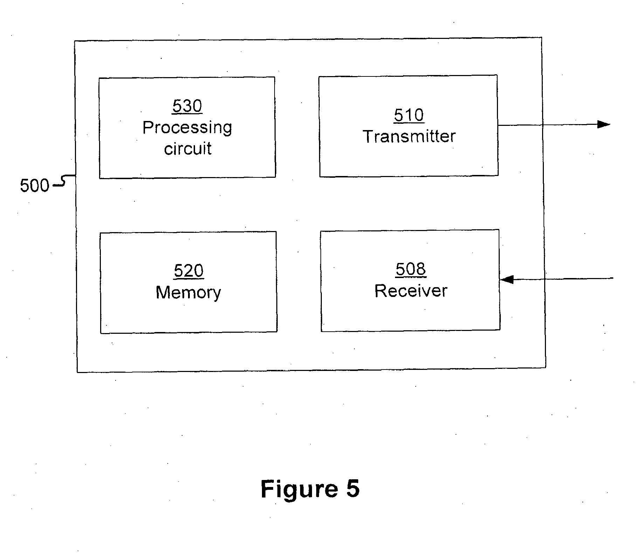

**Figure 5** illustrates an example configuration for the wireless communication device 110. Figure 5 depicts a wireless communication device 500, which is configured for sending an alarm signal to a wireless communications network, such as the wireless communications network 100 in Figure 1. The wireless communication device 500 comprises a receiver 508, a transmitter 510, a memory 520 and a processing circuit 530. The receiver 508 is configured to detect jamming of a downlink signal 160 transmitted from the radio access node 120. The transmitter 510 is configured to transmit, over a non cell-specific contention-based uplink radio channel, an alarm signal 150 comprising information relating to an identity associated with the wireless communication device 500. The memory 520 is preconfigured with the parameters required for accessing the uplink radio channel. The parameters may comprise one or more of: carrier frequency, coding and modulation scheme, or packet size.

In some embodiments, the processing circuit 530 is further configured to attempt to attach to the wireless communications network 100. The processing circuit 530 may be further configured to indicate an alarm mode of operation when attempting to attach to the radio access node 120. If the attempt to attach is successful, the processing circuit 530 is, in these embodiments, further configured to establish a security context with the radio access node 120. In some variants, the processing circuit 530 is further configured to integrity protect the transmitted signal using the established security context.

In some embodiments, the processing circuit 530 is further configured to integrity protect the transmitted signal using a pre-configured key in the device 500.

In some embodiments, jamming detection is combined with detection of other alarm triggers. Thus, the receiver 508 is further configured to detect an alarm trigger, and to perform the step of detecting jamming in response to detecting the alarm trigger. The alarm trigger may comprise one or more of: an intrusion alarm, a user-initiated alarm.

In some embodiments, the transmitter 510 is configured to transmit the alarm signal 150 with high power and/or a robust modulation and coding scheme. For example, the transmitter 510 may be configured to transmit the alarm signal 150 with 1/3 rate coding, and/or to transmit the alarm signal 150 with maximum power.

In all of the above embodiments, the network may optionally track the device once the alarm signal has been received, so that the stolen vehicle or item may eventually be recovered. To make sure that the position of the device can be tracked, the message, i.e. the alarm signal 150, must be transmitted regularly by the wireless communication device 110. However, to avoid repeated collisions, the inter-transmission time should not be constant but random. The average inter-transmission time may depend on the type of device that is protected but may typically be in the order of ten seconds.

Yet another option, which can be applied in all of the above embodiments, is to include the time of the next transmission in the packet transmission, i.e. in the alarm signal 150. As mentioned above, the next transmission time may be randomly chosen by the transmitter, i.e. wireless communication device 110. Indeed, the network 100 and in particular the radio access node 120 must always continuously scan the uplink channel, e.g. random access channel, to find the first transmission from a device. However, when the first packet from a device is found and decoded, such information may simplify the reception of coming packets since it makes it possible for the network 100 to concentrate resources for a given time window and, assuming that the device position does not change significantly in between two packet transmissions, the search can also be concentrated in a certain geographic direction.

It should be noted that information in the packet about upcoming scheduled transmissions may be misused by the thief/intruder. By knowing the transmission schedule, jamming could be temporary to saving jamming resources. Possibly, information in the message could also be manipulated. To protect against these attacks, it is possible to encrypt and/or integrity protect the information of the packet, as already discussed in relation to Figure 4 above. It is advantageous to establish keys beforehand to prevent an attacker from eavesdropping, or potentially manipulating also the key management. As already discussed, in case the device is able to register with the network at least once, a security context will be created and keys therein may be used. Optionally, key establishment could take place at alarm installation time, and be used thereafter. In order to encrypt a packet, the sender must initially either have shared a key with the receiver (symmetric cryptography) or have acquired the public key of the receiver (asymmetric cryptography). The establishment of this initial key may e.g. be executed during the installation of the alarm. The sender may test the alarm channel with a special initiation protocol. In exchange of messages, the sender makes itself known to the receiver and one or more keys are sent. Key exchange may take place opportunistically, e.g. secret keys sent in clear text, public key of the receiver/certificate are sent without any possibility to verify the integrity, or the parties may perform a so-called Diffie-Hellman key exchange. Alternatively, the sender may be configured with a root certificate which enables it to verify the public encryption key certificate and certificate chain of the receiver. Subsequent alarm/tracking messages are sent with integrity protection and encryption based on the keys established in the initiation protocol.

In various embodiments described above, the wireless communication device 110 detects whether it is being jammed. As explained earlier, jamming detection can be done using a variety of known methods, one of which will now be described in more detail. In a first step, the wireless communication device 110 listens to see if it can detect the presence of a radio network. Since these are practically omni-present, lack of such detection may be an indication that the terminal is being jammed. However, this may lead to false emergency transmission. For instance, the wireless device may temporarily be out of radio range, e.g. a car in an underground parking garage. Therefore, in some embodiments the wireless device 110 comprises means for distinguishing lack of radio coverage from active jamming. One possibility is to equip the terminal with a field-strength measuring device, which measures presence of electromagnetic field, such as a radio field. Such devices are known in the art. The field-strength measuring device may be further equipped with filtering, so that only the field-strength of the relevant radio frequency bands is considered. The relevant bands includes the GPS band and the downlink bands of the wireless technique or techniques used, i.e., it is the frequency bands used for positioning by GPS and communication. A criterion for considering a jamming situation to be present is therefore:
IF (no cellular network can be detected) AND (field-strength > threshold) THEN
   jam := TRUE;

However, other means of detecting jamming are not excluded by the present disclosure.

The thief may be aware of the anti-jamming function and may be inclined to prevent it from operating by disabling it. Assuming the thief has picked the car lock, bypassed or ignored the audio alarm siren and the electronic system preventing the car from starting without the right key - or that the thief has actually stolen the key - what additional mischief could he or she do to neutralize the anti-jamming device? Examples include cutting the antenna cable, power cable or physically destroying the unit. As a consequence, the anti-jamming function should preferably be built together with some other vital part that is not easily disabled. E.g. in the car setting, the unit should preferably be built in, e.g. molded into plastic/epoxy underneath the dashboard panel, and the power cable and antenna cable could be part of a closed circuit connected to the start lock, such that breaking the circuit would prevent the car from starting.

Several embodiments set forth in this disclosure define mechanisms for transmitting an alarm signal from a wireless communication device to a wireless communications network by using a non cell-specific contention-based uplink channel, where the parameters required to transmit on the uplink channel are preconfigured in the wireless communication device. It should be noted that the present invention is not limited to the above-describe embodiments, and that various alternatives, modifications and equivalents may be used. The scope of the invention is limited only by the appending claims. In particular, the invention is not limited to any specific wireless system. Any suitable wireless communication system, including UMTS, WiMax, GSM, and LTE, may benefit from exploiting the ideas set forth herein.

Throughout this disclosure, the word "comprise" or "comprising" is intended to be interpreted as non-limiting, i.e. meaning "consist at least of".

The term "message" as used herein should be construed as encompassing a sequence of bits, a packet, or a message comprising a header and a payload. The expressions "alarm message" and "alarm signal" are used interchangeably herein.

## Claims

1. A method in a wireless communication device (110) for transmitting an alarm signal to a radio access node (120), the method comprising:
- detecting (210) jamming of a downlink signal (160) transmitted from the radio access node (120);
**characterized in** further comprising:
- transmitting (220), over a non cell-specific contention-based uplink radio channel, an alarm signal (150) comprising information relating to an identity associated with the wireless communication device (110), wherein the parameters required for transmitting on the non cell-specific contention-based uplink radio channel are preconfigured in the wireless communication device (110).

2. The method of claim 1, wherein the parameters comprise one or more of: carrier frequency, uplink resources in frequency, or a size of the alarm signal.

3. The method of claim 2, wherein the parameters comprise more than one carrier frequency.

4. The method of any one of claims 1-3, wherein at least one of the parameters are provisioned after manufacturing of the wireless communication device (110).

5. The method of claim 4, wherein the at least one parameter is provisioned by one or more of: as preconfigured on a subscriber identity module comprised in the wireless communication device (110), by connecting the wireless communication device (110) to an external provisioning device, or by being hardcoded in the wireless communication device (110).

6. The method of any one of the preceding claims, further comprising:
- attempting (410) to attach to the wireless communications network (100).

7. The method of claim 6, further comprising establishing (430) a security context with the wireless communications network (100), if the attempt to attach was successful.

8. The method of claim 7, wherein the transmitted alarm signal (150) is integrity protected using the established security context.

9. The method of any one of claims 6-8, wherein the attempt to attach to the wireless communications network (100) comprises indicating (440) an alarm mode of operation.

10. The method of any one of the preceding claims, wherein the step of detecting jamming is performed in response to detecting (310) an alarm trigger.

11. The method of claim 10, wherein the alarm trigger comprises one or more of: an intrusion alarm, a user-initiated alarm.

12. The method of any one of the preceding claims, wherein the alarm signal (150) is transmitted with high power and/or a robust modulation and coding scheme.

13. The method of claim 12, wherein the alarm signal (150) is transmitted (220) with 1/3 rate coding and/or with maximum power.

14. The method of any one of claims 1-13, wherein the alarm signal (150) comprises an estimated time for the next transmission of the alarm signal.

15. A wireless communication device (500) configured for sending an alarm signal to a wireless communications network (100), the wireless communication device (500) comprising a receiver (508), a transmitter (510), a memory (520) and a processing circuit (530), wherein:
the receiver (508) is configured to detect jamming of a downlink signal (160) transmitted from the wireless communications network (100); **characterized in that**:
the transmitter (510) is configured to transmit, over a non cell-specific contention-based uplink radio channel, an alarm signal (150) comprising information relating to an identity associated with the wireless communication device (500); and
the memory (520) is preconfigured with the parameters required for accessing the non cell-specific contention-based uplink radio channel.

## Patentansprüche

1. Verfahren in einem Drahtloskommunikationsgerät (110) zum Übertragen eines Alarmsignals an einen Funkzugriffsknoten (120), das Verfahren umfassend:
- Detektieren (210) eines Lahmlegens eines Abwärtsstreckensignals (160), das von dem Funkzugriffsknoten (120) übertragen wird;
**dadurch gekennzeichnet, dass** es ferner umfasst:
- Übertragen (220) eines Alarmsignals (150), das Information, die sich auf eine Identität bezieht, die dem Drahtloskommunikationsgerät (110) zugeordnet ist, umfasst, über einen nicht-zellenspezifischen konfliktbasierten Aufwärtsstreckenfunkkanal, wobei die Parameter, die zum Übertragen auf dem nicht-zellenspezifischen konfliktbasierten Aufwärtsstreckenfunkkanal notwendig sind, in dem Drahtloskommunikationsgerät (110) vorkonfiguriert sind.

2. Verfahren gemäß Anspruch 1, wobei die Parameter eines oder mehrere umfassen von: Trägerfrequenz, frequenzbezogene Aufwärtsstrecken-Ressourcen oder eine Größe des Alarmsignals.

3. Verfahren gemäß Anspruch 2, wobei die Parameter mehr als eine einzige Trägerfrequenz umfassen.

4. Verfahren gemäß einem der Ansprüche 1-3, wobei mindestens einer der Parameter nach dem Herstellen des Drahtloskommunikationsgeräts (110) bereitgestellt wird.

5. Verfahren gemäß Anspruch 4, wobei der mindestens eine Parameter durch eines oder mehrere bereitgestellt wird von: als vorkonfiguriert auf einem Teilnehmeridentitätsmodul, das in dem Drahtloskommunikationsgerät (110) vorhanden ist, durch Verbinden des Drahtloskommunikationsgeräts (110) mit einem externen Bereitstellungsgerät, oder durch fest codiert sein in dem Drahtloskommunikationsgerät (110).

6. Verfahren gemäß einem der vorhergehenden Ansprüche, ferner umfassend:
- Versuchen (410), sich auf ein Drahtloskommunikationsnetzwerk (100) aufzuschalten.

7. Verfahren gemäß Anspruch 6, ferner umfassend ein Aufbauen (430) eines Sicherheitszusammenhangs mit dem Drahtloskommunikationsnetzwerk (100), wenn der Versuch, sich aufzuschalten, erfolgreich war.

8. Verfahren gemäß Anspruch 7, wobei das übertragene Alarmsignal (150) unter Verwendung des aufgebauten Sicherheitszusammenhangs integritätsgeschützt wird.

9. Verfahren gemäß einem der Ansprüche 6-8, wobei der Versuch, sich auf das Drahtloskommunikationsnetzwerk (100) aufzuschalten, das Anzeigen (440) eines Alarmbetriebsmodus umfasst.

10. Verfahren gemäß einem der vorhergehenden Ansprüche, wobei der Schritt des Detektieren des Lahmlegens in Reaktion auf das Detektieren (310) eines Alarmauslösers ausgeführt wird.

11. Verfahren gemäß Anspruch 10, wobei der Alarmauslöser eines oder mehrere umfasst von: einem Eindringalarm, einem von einem Benutzer gestarteten Alarm.

12. Verfahren gemäß einem der vorhergehenden Ansprüche, wobei das Alarmsignal (150) mit hoher Leistung und/oder einem robusten Modulierungs- und Codierungsschema übertragen wird.

13. Verfahren gemäß Anspruch 12, wobei das Alarmsignal (150) mit 1/3-Ratencodierung und/oder mit maximaler Leistung übertragen (220) wird.

14. Verfahren gemäß einem der Ansprüche 1-13, wobei das Alarmsignal (150) eine geschätzte Zeit für die nächsten Übertragung des Alarmsignals umfasst.

15. Drahtloskommunikationsgerät (500), eingerichtet zum Senden eines Alarmsignals an ein Drahtloskommunikationsnetzwerk (100), wobei das Drahtloskommunikationsgerät (500) einen Empfänger (508), einen Überträger (510), einen Speicher (520) und einen Verarbeitungsschaltkreis (530) umfasst, wobei:
der Empfänger (508) dafür eingerichtet ist, ein Lahmlegen eines Abwärtsstreckensignals (160), das von dem Drahtloskommunikationsnetzwerk (100) übertragen wird, zu detektieren;
**dadurch gekennzeichnet, dass**:
der Überträger (510) dafür eingerichtet ist, ein Alarmsignal (150), das Information, die sich auf eine Identität bezieht, die dem Drahtloskommunikationsgerät (500) zugeordnet ist, umfasst, über einen nicht-zellenspezifischen konkurrenzbasierten Aufwärtsstreckenfunkkanal zu übertragen; und
der Speicher (520) mit den Parametern, die für ein Zugreifen auf den nicht-zellenspezifischen konkurrenzbasierten Aufwärtsstreckenfunkkanal notwendig sind, vorkonfiguriert ist.

## Revendications

1. Procédé dans un dispositif de communication sans fil (110) pour émettre un signal d'alarme à un noeud d'accès radio (120), le procédé comprenant :
- la détection (210) de brouillage intentionnel d'un signal de liaison descendante (160) émis à partir du noeud d'accès radio (120) ;
**caractérisé en ce qu'**il comprend en outre :
- l'émission (220), par l'intermédiaire d'un canal radio de liaison montante à base de contention sans cellule spécifique, d'un signal d'alarme (150) comprenant des informations concernant une identité associée au dispositif de communication sans fil (110), dans lequel les paramètres requis pour émettre sur le canal radio de liaison montante à base de contention sans cellule spécifique sont préconfigurés dans le dispositif de communication sans fil (110).

2. Procédé selon la revendication 1, dans lequel les paramètres comprennent un ou plusieurs parmi : fréquence de porteuse, ressources de liaison montante en fréquence, ou une taille du signal d'alarme.

3. Procédé selon la revendication 2, dans lequel les paramètres comprennent plus d'une fréquence de porteuse.

4. Procédé selon une quelconque des revendications 1 à 3, dans lequel au moins un des paramètres est dimensionné après fabrication du dispositif de communication sans fil (110).

5. Procédé selon la revendication 4, dans lequel l'au moins un paramètre est dimensionné par un ou plusieurs parmi : sous forme préconfigurée sur un module d'identité d'abonné compris dans le dispositif de communication sans fil (110), en connectant le dispositif de communication sans fil (110) à un dispositif de dimensionnement externe, ou en étant codé en dur dans le dispositif de communication sans fil (110).

6. Procédé selon une quelconque des revendications précédentes, comprenant en outre :
- la tentative (410) de joindre le réseau de communication sans fil (100).

7. Procédé selon la revendication 6, comprenant en outre l'établissement (430) d'un contexte de sécurité avec le réseau de communication sans fil (100), si la tentative de joindre a réussi.

8. Procédé selon la revendication 7, dans lequel le signal d'alarme émis (150) possède une protection d'intégrité en utilisant le contexte de sécurité établi.

9. Procédé selon une quelconque des revendications 6 à 8, dans lequel la tentative de joindre le réseau de communication sans fil (100) comprend l'indication (440) d'un mode de fonctionnement d'alarme.

10. Procédé selon une quelconque des revendications précédentes, dans lequel l'étape de la détection de brouillage intentionnel est réalisée en réponse à la détection (310) d'un déclenchement d'alarme.

11. Procédé selon la revendication 10, dans lequel le déclenchement d'alarme comprend un ou plusieurs parmi : une alarme d'intrusion, une alarme déclenchée par utilisateur.

12. Procédé selon une quelconque des revendications précédentes, dans lequel le signal d'alarme (150) est émis avec haute puissance et/ou un plan robuste de modulation et de codage.

13. Procédé selon la revendication 12, dans lequel le signal d'alarme (150) est émis (220) avec un codage à taux 1/3 et/ou avec puissance maximum.

14. Procédé selon une quelconque des revendications 1 à 13, dans lequel le signal d'alarme (150) comprend un temps estimé pour la transmission suivante du signal d'alarme.

15. Dispositif de communication sans fil (500) configuré pour envoyer un signal d'alarme à un réseau de communication sans fil (100), le dispositif de communication sans fil (500) comprenant un récepteur (508), un émetteur (510), une mémoire (520) et un circuit de traitement (530), dans lequel :
le récepteur (508) est configuré pour détecter un brouillage intentionnel d'un signal de liaison descendante (160) émis à partir du réseau de communication sans fil (100) ;
caractérisé en ce qui :
l'émetteur (510) est configuré pour émettre, par l'intermédiaire d'un canal radio de liaison montante à base de contention sans cellule spécifique, un signal d'alarme (150) comprenant des informations concernant une identité associée au dispositif de communication sans fil (500) ; et
la mémoire (520) est préconfigurée avec les paramètres requis pour accéder au canal radio de liaison montante à base de contention sans cellule spécifique.
